# EUROPEAN PATENT APPLICATION

(11) **EP 1 982 935 A1**
(43) Date of publication of application: **22.10.2008**
(21) Application number: 08251350.8
(22) Date of filing: 07.04.2008
(51) Int. Cl.: B65G 19/02

(54) **Suspension rail**

(30) Priority: 14.04.2007 GB 0707233
(71) Applicant: Hangerglide Limited, Upton, Pontefract West Yorkshire, WF9 1FE (GB)
(72) Inventor: Howarth, Denis, Upton, Pontefract West Yorkshire, WF9 1FE (GB); Walker, Graham, Upton, Pontefract West Yorkshire, WF9 1FE (GB)
(74) Representative: Wood, Graham

(57) **Abstract**

The invention relates to the provision of a suspension rail of a type used to support, typically, a plurality of items such as garment hangers thereon. The suspension rail can be used in vehicles and/or warehouses to support a large numbers of hangers prior to and during transport to retail premises. The suspension rail comprises a rail body to which is engaged a slide track, said slide track having a top surface which forms the contact surface for the hangers and on the opposing surface, engagement means which are received within the rail body to engage the slidetrack into position. The position of the slidetrack allows improved sliding of the garment hangers along the same and reduces the possibility of grooving of the hangers.

## Description

This invention relates to an improved suspension rail for the carrying of hangers, especially, although not exclusively, garment hangers.

In garment manufacturing factories, in garment marshalling sheds, and garment carrying vehicles, and some other locations, rail systems are used for the suspension and conveying of garments and garment parts in large numbers. These systems use suspension rails which may be used in conjunction with drive arrangements so that the garments can be power driven from location to location. Additionally or alternatively, the systems may have rails from which the garments are suspended on their hangers for movement by manual force.

In any event, the garments are suspended by their hangers in such a manner as to friction engage the rail in that the hook of the hanger drapes over the rail and depending upon the weight of the hanger and its supported garment, so the hanger will engage the rail with a certain force. To move the hanger and its garment along the rail, a certain effort is needed to overcome the friction between the rail and the hanger, and when it is noted that as many as 1000 hangers and their garments may have to be moved at any one time, considerable effort is needed to move the garments, and accordingly it is desired that the coefficient of friction, static and dynamic, between the hangers and rail, should be as small as possible.

To achieve this it is known to provide suspension rails equipped with low friction polymer portions to reduce the frictional forces acting between the hangers and the rail. EP1334926 discloses how slidetracks each consisting of a triangular parallel strip of low friction polymer, are incorporated into a rail at spaced locations and how the hook portion of hangers run along the tops of said slidetrack.

Although this design of slidetrack reduces the frictional forces, it unfortunately focuses the force of the hanger onto the relatively small protruding corners of the triangles. This increases the pressure and can wear grooves into the hangers. Another problem encountered with the prior art approach is that hangers frequently jump when moving along the rails and the ends of the hook portions of the hanger can become jammed in gaps in the rail body, and/or gaps between the rail body and the slidetracks. This is a particular problem when hangers are tied together and can mean that the hangers are supported by the rails rather than the sidetracks. This in turn means that the sliding benefits of the slidetracks are not obtained.

In addition to the above problems the manufacture of the slidetrack presents further problems. Firstly, because of the small size of the slidetracks, and their tendency to wear, said slidetracks have to be constructed from relatively hard plastics. Unfortunately, hard plastics do not mix/blend well with lubricants and lubricating polymers such as silicones and PTFE during the extrusion process. Therefore, the slidetrack is lubricated and/or waxed after manufacture and periodically when in use, to achieve the desired frictional properties. Secondly, the hard plastics can only be extruded at low rates which produce short lengths of slidetrack at relatively high cost of manufacture.

It is therefore an aim of the present invention to provide an improved suspension rail which overcomes the aforementioned problems.

In the first aspect of the invention there is provided a suspension rail for garment hangers, the said rail comprising a rail body and a slidetrack, said slidetrack, on a first face, having engagement means to allow the same to be engaged with engagement formations along the rail body, said slidetrack extending lengthwise along the rail body and wherein the slidetrack is provided with an opposing second face positioned to contact the hangers and said second surface is formed and located to extend substantially across the width of the top surface of the rail body to ensure that the hangers contact the slidetrack when suspended from the suspension rail.

The increased surface area of the slidetrack increases the load bearing capacity of the same. Therefore, the slidetrack is more resistant to wear and heavier hangers and loads can be supported thereon without damaging the slidetrack. Alternatively, softer plastics can be used in constructing the slidetrack whilst maintaining resistance to wear. Softer plastics are easier to extrude and blend with lubricants and low friction plastics such as PTFE and silicones. In addition, easier extrusion allows longer lengths of slidetrack to be extruded which in-turn improves the cost efficiency of the manufacturing process.

In an embodiment at least the corner edges of the second face of the slidetrack are convex in shape so as to substantially follow the curvature of part of the hook portion of the hanger to be supported therefrom.

In one embodiment the slidetrack is made of at least one low friction plastic. Typically the low friction plastics used are plastics mixed and/or blended with PTFE and/or silicones. Preferably the plastic is mixed and or blended with between 5%-32% wt of PTFE and/or silicones to produce a low friction plastic.

In one embodiment the rail body is provided with engagement channels running lengthwise along the rail body. Typically a central channel and two side channels, one spaced on either side of the central channel are provided along the length of the rail body.

In one embodiment the slidetrack has at least one engaging portion located on the first face, on the underside of the slide track means, said engaging portions are used to attach said slide track means to the rail body by engaging with channels running lengthwise along the rail body. Preferably the engaging portions are of a shape complimentary to that of the channels in the rail body and run along the length of the slidetrack.

In one embodiment there is at least one expansion joint in the rail body and/or slidetrack. Typically the at least one expansion joint is located in the slidetrack to allow for the slidetrack to expand as temperature increases. Preferably the gaps in the slidetrack which define the expansion joints are sufficient to take into account any expansion which is expected to occur in normal operating conditions.

The increased engagement area between the surface of the single slidetrack and the rail body improves the location and hold of the slidetrack in position. This reduces rippling due to expansion of the slidetrack due to heat and can reduce the number of expansion joints required. Indeed, in one embodiment adjacent slidetrack lengths are abutted end to end along the rail body and no expansion joints are required.

In one embodiment if expansion joints are used there are provided jumper rails to bridge the expansion joints. Typically the jumper rails have at least one ramped portion and at least one bridging portion over which the hangers travel as they move along the rail and over the expansion joints. Preferably there is no need for a lead in portion and/or tongue for the jumper rail to connect to the slidetrack because the jumper rail can extend directly from said slidetrack.

In one embodiment the slidetrack is also located to the rail body by securing means. Typically the slidetrack sits loosely within the grooves of the rail body until they are secured. Preferably the securing means are screws which pass through countersunk apertures in the slidetrack into the rail body.

In an embodiment the slidetrack is secured to the rail body by deforming at least a portion of the grooves with which the slidetrack is engaged. Typically the deformed grooves impinge upon and therefore secure the slidetrack in position.

In an embodiment a combination of securing means and deformation of the grooves secures the slidetrack in place.

In an embodiment the slidetrack is hollow.

In a further embodiment the slidetrack is a one-piece extrusion.

In another aspect of the invention there is provided a suspension rail comprising a rail body and slidetrack, said slidetrack being attached to the rail body, extending lengthwise along the rail body and positioned to slidably support items on an exposed surface thereon wherein said surface is shaped across its width so as to provide a plurality of spaced contact points on said surface for said item.

In one embodiment the said surface extends substantially across the width of the rail body and provides two spaced contact points for garment hangers located thereon.

In one embodiment the suspension rail comprises a rail body and a single slide track, said slide track extending lengthwise along the rail body.

In a further aspect of the invention there is provided a suspension rail comprising a rail body and a single slidetrack, extending lengthwise along the rail body.

A specific embodiment of the invention is now described with reference to the accompanying drawings wherein:
Figure 1 shows an end elevation cross sectional view of the suspension in accordance with one embodiment;
Figure 2 shows an end elevation cross sectional view of the suspension rail, with a garment hanger supported therewith;
Figure 3 shows an end-on cross sectional view of the rail body only; and
Figure 4 shows a perspective view of a suspension rail in use.

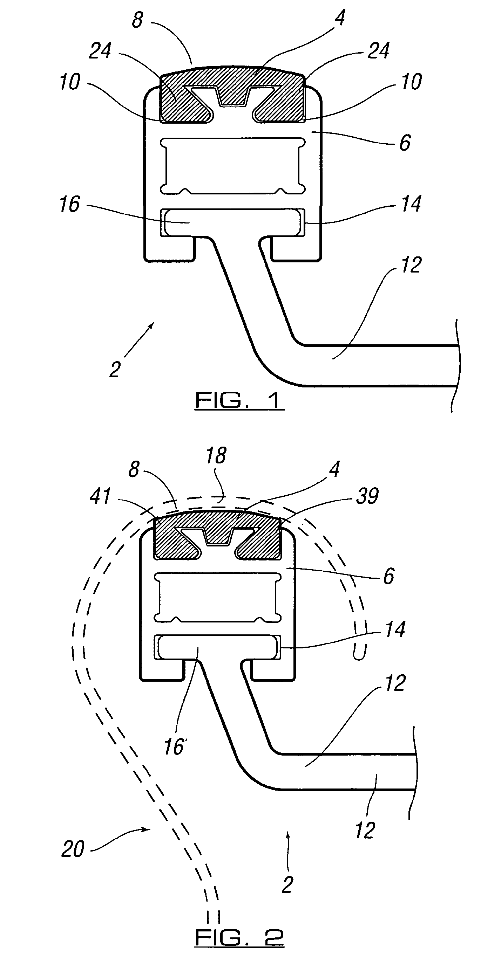

Turning firstly to figure 1, there is illustrated a suspension rail 2, comprising a slidetrack 4 attached to the rail body 6. The slidetrack 4 provides a single substantially uniform top surface 8 which extends along the length of the rail body 6 and across substantially all of the width of said rail body 6. The slidetrack 4 is attached to the rail body 6 through engaging portions 24 formed on the face opposing the top face 8 and which engage with grooves 10 which lie along the length of said rail body 6. The slidetrack 4 can also be secured to the rail body 6 by securing means such as screws and the like. The rail body 6 and in-turn the slidetrack 4 are supported by suspension arm 12. The rail body 6 is secured to suspension arm 12 by securing means. In this example rail body 6 is secured to the suspension arm 12 through engagement of channel 14 with the T-piece end 16 of suspension arm 12.

In use, suspension arm 12 is fixed to a suitable structure such as a floor, wall or ceiling, at a suitable height to prevent garments hanging from the suspension rail 2 from trailing on the floor. The suspension rail 2 is equipped with as many suspension arms as required to provide structural support to the rail. In some examples the suspension arm 12 is manufactured from extruded aluminium. It is also possible that the suspension arm is provided as one continuous unit which extends along the length of the rail. Because thousands of garments can weigh a considerable amount, strong yet lightweight materials such as plastics and/or aluminium are typically selected to manufacture the suspension arm 12 and/or the rail body 6.

Figure 2 illustrates a suspension rail 2, comprising a slidetrack 4 attached to the rail body 6. The slidetrack 4 has a top face 8 which extends along the length of the rail body 6. The face 8 supports and contacts the hangers 20 that are supported on the suspension rail. The extension of surface 8 across the width of the rail body increases the load bearing capacity and durability of the said slidetrack 4 and prevents the hanger from being supported by or being snagged by contact with the rail body. It can also be seen that the hanger contacts the single slidetrack at two locations 39, 41 across the width of the slidetrack. Also, at the location of contact the surface of the slidetrack is convex in shape therefore minimising the risk of grooving of the hanger being caused. Also in this embodiment rail body 6 is secured to the suspension arm 12 through engagement of channel 14 with the T-piece end 16 of suspension arm 12. Although the end of the suspension arm 12 engaged with the rail body 6 is in this example T-shaped, it is appreciated that the end of the suspension arm could be of any suitable shape which both supports the rail and provides a suitable degree of stability.

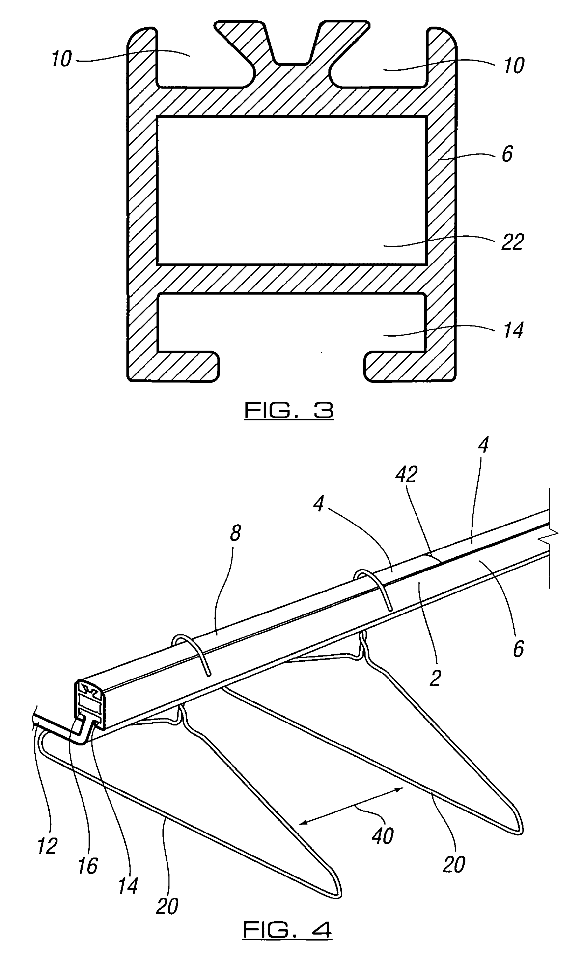

The slide track 4 is typically constructed from extruded plastic with low-frictional properties. This reduces the force required to move garments and hangers and also reduces wear on the slidetrack. Garments can be slidably moved along the length of the slidetrack as indicated by arrow 40 in figure 4 either by machine by being manually pushed. Large amounts of garments on hangers are usually found in clothing warehouses, large scale dry-cleaners, clothing transport depots and the like. Figure 4 also illustrates how the slidetracks 4, lengths can be abutted end to end 42, as the slidetracks are securely fitted in position.

Figure 3 illustrates a cross sectional view of the rail body 6, typically the rail body 6 is manufactured from extruded aluminium and/or stainless steel. The hollow portion 22 is included to reduce the overall weight of rail body 6. The channels 10 running along the length of the rail body 6 are typically triangular in shape, and act to locate the slidetrack within the rail body rather than externally thereof, thereby providing greater support and improved location of the slidetrack with the body. The slidetrack is usually movable when it is engaged with the grooves so that the same can be positioned. Once positioned the slidetrack can be further secured to the rail body 6 with securing means. The securing means are typically screws and/or the like. The rail body 6 itself is supported by a suspension arm (not shown) which engages with channel 14 which also runs along the length of the rail body. The advantage of having the channel 14 running along the length of the body is that suspension arms can be inserted where required to provide stability and support.

## Claims

1. A suspension rail for garment hangers the said rail comprising a rail body and a slidetrack, said slidetrack, on a first face, having engagement means to allow the same to be engaged with engagement formations along the rail body, said slide track extending length wise along the rail body and wherein the slidetrack is provided with an opposing second face positioned to contact the hangers and said second surface is formed and located to extend substantially across the width of the top surface of the rail body to ensure that the hangers contact the slidetrack when suspended from the suspension rail.

2. A suspension rail according to claim 1 wherein the suspension track is formed from plastics material and the rail body is formed from a metal or metal alloy.

3. A suspension rail according to claim 2 wherein the plastics material used has low friction characteristic and is mixed and/or blended with PTFE and/or silicones.

4. A suspension rail according to claim 1 wherein the rail body is provided with engagement channels running lengthways along the same.

5. A suspension rail according to claim 4 wherein the engagement channels comprise a central channel and two side channels, one located on either side of the central channel along the length of the rail body.

6. A suspension rail according to claim 1 wherein the slidetrack has at least one engaging portion located on the underside of the slidetrack, to attach the said slidetrack to the rail body with the said engaging portion being received to lie within the rail body.

7. A suspension rail according to claim 1 wherein at least one expansion joint is provided in the rail body and/or slidetrack.

8. A suspension rail according to claim 1 wherein adjacent lengths of slidetrack are positioned along the rail body with their adjacent ends abutting.

9. A suspension rail according to claim 1 wherein the slidetrack is provided with additional location on the rail body via securing means.

10. A suspension rail according to claim 1 wherein when the slidetrack is positioned in engagement with the rail body, at least a portion of one of the engagement channels of the rail body is deformed to enhance engagement between the slidetrack and the rail body.

11. A suspension rail according to claim 1 wherein the slidetrack is a one piece extrusion.

12. A suspension rail comprising a rail body and slidetrack, said slidetrack being attached to the rail body, extending lengthwise along the rail body and positioned to slidably support items on an exposed surface thereon wherein said surface is shaped across its width so as to provide a plurality of spaced contact points on said surface for said item.

13. A suspension rail according to claim 12 wherein the said surface extends substantially across the width of the rail body and provides two spaced contact points for garment hangers located thereon.

14. A suspension rail comprising a rail body and a single slide track, said slide track extending lengthwise along the rail body.
